# EUROPÄISCHE PATENTSCHRIFT

(11) **EP 0 545 309 B1**
(45) Veröffentlichungstag und Bekanntmachung des Hinweises auf die Patenterteilung: **09.02.2000**
(21) Anmeldenummer: 92120300.6
(22) Anmeldetag: 27.11.1992
(51) Int. Cl.: C08L 67/00, C08L 77/12, C08L 79/08, C08K 5/00

(54) **Mischungen aus flüssigkristallinen Copolymeren, Polyetherimiden und Verträglichkeitsvermittlern sowie deren Verwendung**
Mixtures of liquid crystalline copolymers, polyetherimides and compatible agents and their use
Mélanges de copolymères cristallins liquides, de polyétherimides et d'agents compatibilisants ainsi que leur utilisation

(30) Priorität: 30.11.1991 DE 4139532
(43) Veröffentlichungstag der Anmeldung: 09.06.1993
(73) Patentinhaber: Ticona GmbH, 65451 Kelsterbach (DE)
(72) Erfinder: Römer, Michael, Dr., W-6080 Gross-Gerau (DE); Schleicher, Andreas, Dr., W-6141 Einhausen (DE)

(56) Entgegenhaltungen:
- EP-A- 0 126 928
- EP-A- 0 278 066
- EP-A- 0 291 323
- US-A- 4 250 279
- CHEMICAL ABSTRACTS, Band 116, Nr. 26, 29. Juni 1992, Seite 62, Spalte 2 - Seite 63, Spalte 1, Zusammenfassung Nr. 256897r, Columbus, Ohio, US; T. SUN et al.: "Thermoforming of in situ reinforced thermoplastic composites", & REPORT 1991, ARO-25344.9MS, ORDER NO. AD-A232816, 20PP, AVAIL. NTIS FROM GOV. REP. ANNOUNCE. INDEX (U.S.) 1991, 91(15), ABSTR. NO. 140,728

## Beschreibung

Die Erfindung betrifft Mischungen aus flüssigkristallinen Copolymeren, Polyetherimiden und Verträglichkeitsvermittlern, die verbesserte Reißdehnungs- und Reißfestigkeitswerte aufweisen sowie deren Verwendung.

Die Synthese und Eigenschaften flüssigkristalliner Copolyester (LCP) und Copolyesteramide sind Gegenstand einer Vielzahl von Veröffentlichungen. Ein gängiges Verfahren zu ihrer Herstellung ist die Schmelzkondensation der Ausgangverbindungen, wodurch eine hohe Reinheit und ein hohes Molekulargewicht der Polymere gewährleistet wird (US-A-4 161 470; US-A-3 637 595).

In jüngster Zeit hat das Interesse an flüssigkristallinen Polyestern zugenommen, wie das Erscheinen einer Reihe von Publikationen zeigt (EP-A-0 394 813; EP-A-0 390 489). Alle diese Veröffentlichungen weisen auf die außergewöhnlichen mechanischen und rheologischen Eigenschaften der Materialien hin. Hervorzuheben sind dabei insbesondere ihre hohen Elastizitätsmoduln sowie die hervorragenden Fließfähigkeiten bei hohen Scherraten.

Für viele Anwendungen reicht jedoch weder die Reißfestigkeit noch die Reißdehnung aus. Diese Nachteile können auch durch eine Zugabe von amorphen Polymeren z. B. Polyetherimiden (PEI) zu den LCP's nicht verbessert werden (EP-A-0 278 066).

Die Aufgabe der vorliegenden Erfindung besteht darin, die Reißfestigkeits-und Reißdehungswerte derartiger Mischungen zu verbessern.

Aus der Literatur ist ferner bekannt, daß der Zusatz sogenannter Verträglichkeitsvermittler zu Polymerlegierungen eine Verbesserung der Eigenschaften dieser Legierungen bewirken kann (S.B. Brown, C.M. Orlando, "Reactive Extrusion", Encycl. Polym. Sci. Eng., Bd. 14, 1988; K. Kreisher, "Plastics Technology", Febr. 1989 "Compatibilzers and reactive compounding"). Man ist jedoch bis heute weit davon entfernt, die durch diese Zugabe erzielbaren Eigenschaften gesichert vorhersagen zu können. Der Zusatz solcher Substanzen bleibt daher im Hinblick auf die Resultate weitgehend empirisch.

Es zeigte sich, daß die genannte Aufgabe durch Zusatz von bestimmten Verträglichkeitsvermittlern zu Legierungen aus flüssigkristallinen Copolyestern oder Copolyesteramiden und Polyetherimiden gelöst wurde. Diese modifizierten Legierungen weisen mechanische Eigenschaften auf, die denen der Legierung allein bzw. den Einzelkomponenten überlegen sind.

Die Erfindung bezieht sich daher auf eine Mischung aus jeweils mindestens einem A) flüssigkristallinen Copolymeren, B) Polyetherimid und C) Verträglichkeitsvermittler, wobei der Anteil der Komponenten A) und B) jeweils 5 bis 95 Gew.-% bezogen auf die Summe beider Komponenten beträgt, der Verträglichkeitsvermittler C) in Mengen von 0,5 bis 10 Gew.-% bezogen auf die Polymermischung A) und B) eingesetzt wird, die Komponente A) ein aromatischer Polyester oder ein Copolyesteramid ist und die Komponente C) Struktureinheiten der unten angegebenen Formel (IX) aufweist.

Die in den Mischungen gemäß der Erfindung eingesetzten flüssigkristallinen Polymere A) sind im allgemeinen vollaromatische Polyester, die anisotrope Schmelzen bilden und mittlere Molekulargewichte (Mw=Gewichtsmittel) von 2000 bis 200000, bevorzugt von 3500 bis 50000 und insbesondere von 4000 bis 30000 g/mol aufweisen. Eine für die Mischungen gemäß der Erfindung geeignete Klasse flüssigkristalliner Polymere ist beschrieben in US-A-4 161 470. Es handelt sich dabei um Naphtoyl-Copolyester mit wiederkehrenden Struktureinheiten der Formel I und II 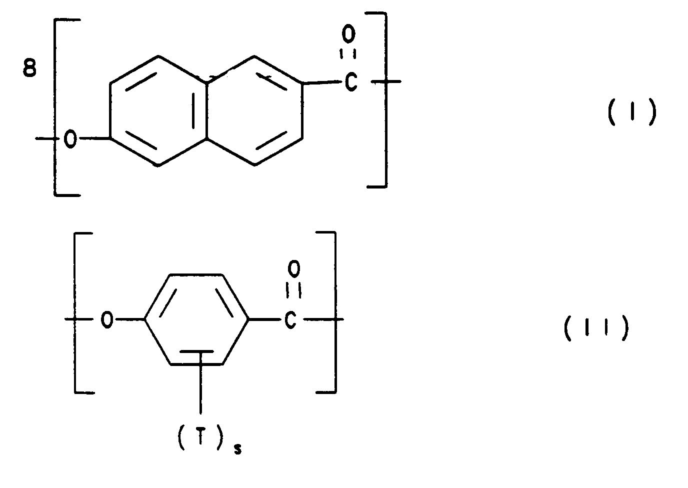 worin T ausgewählt ist aus einem Alkylrest, einem Alkoxyrest, jeweils mit 1 bis 4 Kohlenstoffatomen oder einem Halogen, vorzugsweise Chlor, Brom oder Fluor, s bedeutet Null oder eine ganze Zahl 1,2,3 oder 4, wobei im Falle mehrerer Reste T diese unabhängig voneinander gleich oder verschieden sind. Die Naphthoyl-Copolyester enthalten 10 bis 90, vorzugsweise 25 bis 45 Mol-% Struktureinheiten der Formel I und 90 bis 10, vorzugsweise 85 bis 55 Mol-% der Formel II.

Weitere für die Mischungen gemäß der Erfindung eingesetzte flüssigkristalline Polyester sind in EP-A-0 278 066 und US-A-3 637 595 beschrieben. Die dort angeführten Oxybenzoylcopolyester enthalten Struktureinheiten der Formeln III, IV und V, wobei jeweils ein oder mehrere genannte Struktureinheiten vorliegen können.

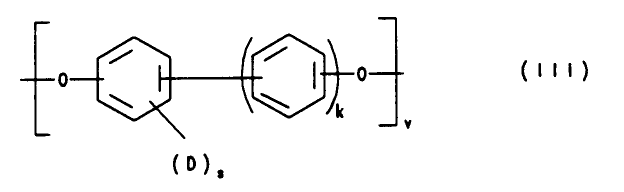

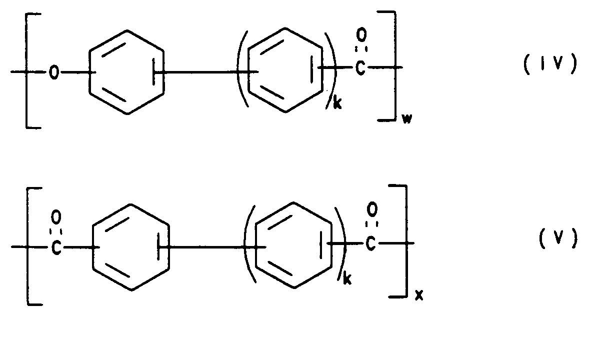

In den Formeln III, IV und V ist k Null oder 1, v, w und x sind ganze Zahlen, die gleich oder größer als 1 sind, D ist ausgewählt aus einem Alkylrest mit 1 bis 4 Kohlenstoffatomen, einem Arylrest, einem Aralkylrest mit jeweils 6 bis 10 Kohlenstoffatomen oder einem Halogen wie Fluor, Chlor oder Brom, s hat die obengenannte Bedeutung, wobei bei mehreren Resten D diese unabhängig voneinander gleich oder verschieden sind. Die Summe der Indexzahlen v, w und x weist Werte von 30 bis 600 auf. Die Oxybenzoylcopolyester enthalten im allgemeinen 0,6 bis 60, vorzugsweise 8 bis 48 Mol-% Struktureinheiten der Formel III, 0,4 bis 98,5, vorzugsweise 5 bis 85 Mol-% Struktureinheiten der Formel IV und 1 bis 60, vorzugsweise 8 bis 48 Mol-% Struktureinheiten der Formel V, wobei sich die Anteile der Struktureinheiten der Formeln III, IV und V auf 100 Mol-% ergänzen.

Für die Mischungen sind ebenfalls Copolyester geeignet, die nur Struktureinheiten der Formeln III und V enthalten. Diese flüssigkristallinen Polymere enthalten im allgemeinen 40 bis 60 Mol-% der Struktureinheiten der Formel III und 60 bis 40 Mol-% Struktureinheiten der Formel V. Bevorzugt ist hierbei ein Molverhältnis von 1 zu 1. Solche Polyester werden zum Beispiel in US-A-4 600 765; US-A-4 614 790 und US-A-4 614 791 beschrieben.

Ebenfalls geeignet sind solche Copolyester, die neben den Struktureinheiten ausgewählt aus den Formeln III bis V, auch solche der Formeln I und/oder II enthalten; z.B. mit einem Anteil an Struktureinheiten der Formel I von 15 bis 1 Mol-%, der Formel II von 50 bis 79 Mol-%, der Formel III von 20 bis 10 Mol-% und der Formel V von 20 bis 10 Mol-%.

Für die Mischungen gemäß der Erfindung sind außerdem Copolyesteramide geeignet, die neben einer oder mehreren Struktureinheiten der Formeln I bis V noch zusätzlich mindestens eine Struktureinheit der Formel VI 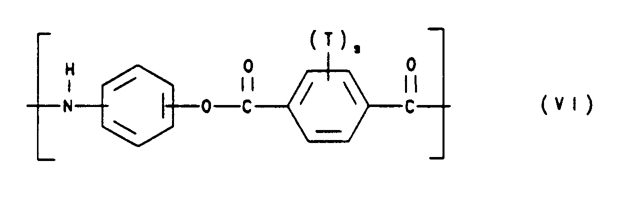 enthalten, worin T und s die bereits beschriebene Bedeutung besitzen.

Die Legierungen gemäß der Erfindung enthalten als Komponente B) Polyetherimide mit wiederkehrenden Einheiten der Formel: 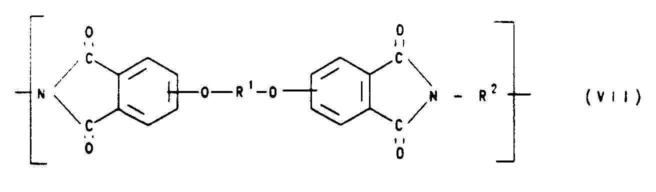 wobei R¹ ausgewählt ist aus einem substituierten oder unsubstituierten aromatischen Rest der Formel

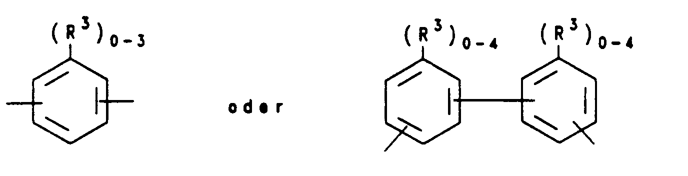

oder einem zweiwertigen Rest der Formel 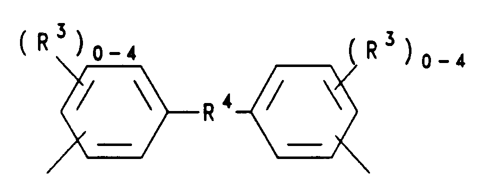 in denen R³ für C₁-C₆-Alkyl oder Halogen wie Fluor, Chlor oder Brom steht und R⁴ eine direkte Bindung oder ein divalenter Rest -O-, -S-, -CO-, SO₂-, -SO, Alkylen und Alkyliden mit jeweils 1 bis 6 Kohlenstoffatomen oder Cycloalkylen und Cycloalkyliden mit jeweils 4 bis 8 Kohlenstoffatomen darstellt. R² ist ein aromatischer Kohlenwasserstoffrest mit 6 bis 20, vorzugsweise 6 bis 12 Kohlenstoffatomen, oder ein halogen- oder alkylsubstituiertes Derivat davon, wobei die Alkylgruppe 1 bis 6 Kohlenstoffatome enthält, ein Alkylen- oder Cycloalkylenrest mit 2 bis 20, vorzugsweise 2 bis 6 Kohlenstoffatomen oder ein zweiwertiger Rest der Formel 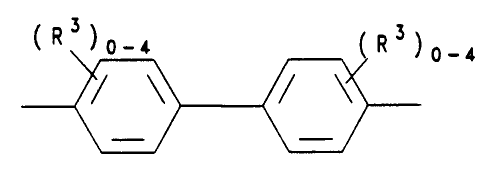 wobei R³ die obige Bedeutung hat.

Weitere Polyetherimide, die als Legierungsbestandteil eingesetzt werden können, umfassen solche mit folgenden wiederkehrenden Einheiten der Formel 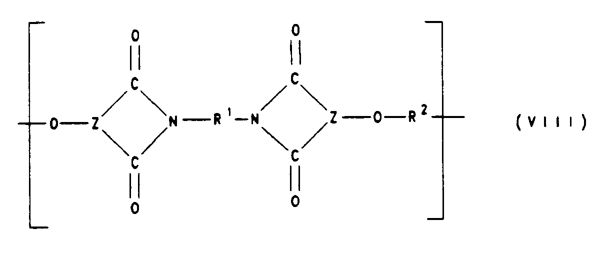 in der R¹ und R² wie oben definiert ist und wobei 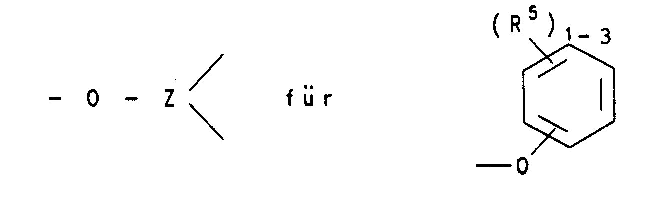 steht. R⁵ ist in dem Rest -O-Z= unabhängig voneinander Wasserstoff, Alkyl oder Alkoxy mit 1 bis 6 C-Atomen im Alkyrest, oder steht für 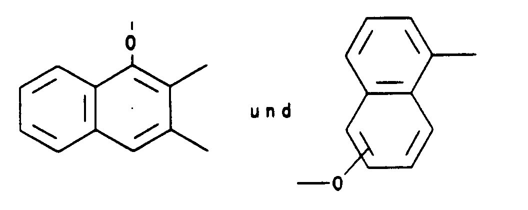 wobei der Sauerstoff mit einem der Ringe verknüpft ist und in ortho- oder para-Stellung zu einer der Bindungen der Imidcarbonylgruppe steht.

Ein bevorzugtes Polyetherimid weist die wiederkehrenden Einheiten 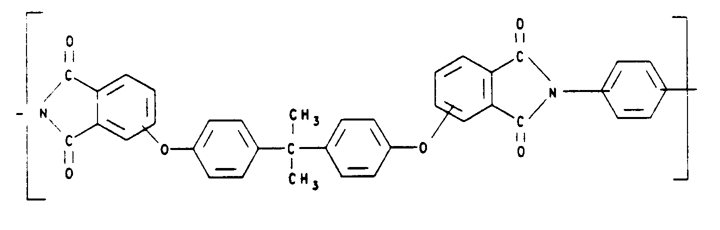 auf.

Der Begriff Polyetherimid schließt Homopolymere, Copolymere, Terpolymere und Blockcopolymere ein. Die verwendeten Polyetherimide haben Staudingerindizes von 0,1 bis 3, bevorzugt 0,3 bis 1,5 und insbesondere 0,3 bis 1 dl/g, gemessen bei 25°C in N-Methylpyrrolidon oder Methylenchlorid.

Die gemäß der Erfindung eingesetzten Polyetherimide sind bekannt (US-A-3,847,867; 3,847,869; 3,850,885; 3,852,242; 3,855,178; 3,887,558; 4,017,511; 4,024,110; 4,250,279).

Gemäß der Erfindung eingesetzte Verträglichkeitsvermittler C) sind kondensationsfähige Aryl- und Alkylverbindungen oder Mischungen aus Aryl- und Alkylverbindungen mit mindestens zwei funktionellen Gruppen , die sich aus Struktureinheiten der Formel IX zusammensetzen,

(X-)ᵢ--(R⁷)ₗ-(Y)ₘ-(R⁸)ₙ)ⱼ--(-Z)ₚ (IX)

worin X und Z gleich oder verschieden sind und unabhängig voneinander für eine Hydroxy- oder Aminogruppe stehen sowie COOH, -CO-O-CO- oder -COOR darstellen. Die Indizes i und p sind jeweils gleich oder verschieden und stellen ganze Zahlen dar, wobei die Summe aus beiden 2 bis 10, vorzugsweise 2 bis 6 beträgt.
R⁷ und R⁸ sind jeweils gleich oder verschieden bedeuten Alkylreste mit 1 bis 8, vorzugsweise 1 bis 4 Kohlenstoffatomen oder Arylreste mit 6 bis 30, vorzugsweise 6 bis 12 C-Atomen oder Mischungen aus beiden. Die Indizes I und n sind Null oder 1, wobei die Summe aus beiden mindestens 1 ist. Y steht für eine divalente Gruppe O, C = O, SO₂, SO, S und NR⁹, wobei R⁹ eine substituierte oder unsubstituierte Alkyl- oder Arylgruppe mit 1 bis 18, vorzugsweise 1 bis 6 Kohlenstoffatomen bedeutet. m ist Null oder 1 und j eine ganze Zahl 1, 2 oder 3. Beispiele für derartige Verbindungen sind vorzugsweise para-Aminobenzoesäure (PAB) und Pyromellithsäuredianhydrid (PMDA).

Der Anteil der Polyetherimide B) in den Mischungen beträgt 5 bis 95 Gew.-%, vorzugsweise 5 bis 50 Gew.-% und der Anteil an flüssigkristallinen Polyestern (A) 95 bis 5 Gew.-%, vorzugsweise 95 bis 50 Gew.-%.; bezogen auf die Summe der Komponenten A und B. Der Anteil an Verträglichkeitsvermittlern C) in den Mischungen, bezogen auf die gesamte Polymermischung, beträgt 0,5 bis 10 Gew.-%, vorzugsweise 0,5 bis 5 Gew.-%. Die Mischungen gemäß der Erfindung können jeweils mindestens ein Polyetherimid, einen flüssigkristallinen Polyester und einen Verträglichkeitvermittler, sowie modifizierte Polyetherimide und modifizierte flüssigkristalline Polyester enthalten.

Die Mischungen gemäß der Erfindung werden nach bekannten Standardmethoden hergestellt und verarbeitet, wie sie für Thermoplasten üblich sind, z. B. durch Kneten, Extrudieren, Pressen oder Spritzgießen.

Die Mischungen können zusätzlich übliche Additive enthalten, beispielsweise thermische Stabilisatoren, UV-Stabilisatoren, Antistatika, Flammschutzmittel, Farbstoffe, Pigmente, anorganische und organische Füllstoffe, d. h. insbesondere auch verstärkende Zusätze wie Glas-, Kohle- oder Hochmodulfasern. Die Mischungen eignen sich zur Herstellung von Formkörpern, beispielsweise in Form von Platten, Fasern, Folien, Steckerleisten und Schläuchen, hergestellt nach dem Spritzguß-oder Extrusionsverfahren, insbesondere aber auch als Matrixmaterial für Verbundwerkstoffe.

Folgende Materialien wurden in den Beispielen eingesetzt:
(A1) Flüssigkristalliner Copolyester mit Struktureinheiten der Formel 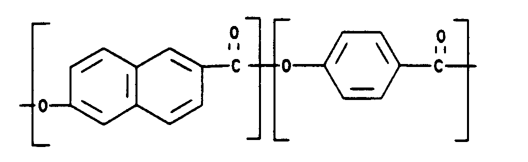 worin der Anteil der Oxynaphthoylstruktureinheiten 20 Mol% und der Anteil der Oxybenzoylstruktureinheiten 80 Mol% beträgt.

Das eingesetzte Polyetherimid (B) enthält Wiederholungseinheiten der Formel 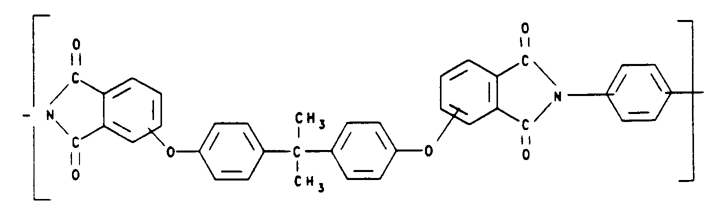 Als Verträglichkeitsvermittler wurden para-Aminobenzoesäure (PAB) und Pyromellithsäuredianhydrid (PMDA) eingesetzt.

Die Materialien wurden zunächst getrocknet (140°C, 24h) und anschließend in verschiedenen Gewichtsvehältnissen in einem Kneter, Typ Rheocord System 90/Rheomix 600 der Fa. Haake (Karlsruhe, Bundesrepublik Deutschland) unter Schutzgas (Stickstoff) bei Temperaturen von 310°C bis 340°C geknetet und die erhaltenen Mischungen zu Formteilen wie Schulterstäben oder Platten verarbeitet und auf ihre physikalischen und thermischen Eigenschaften hin untersucht. Dazu wurden folgende Geräte verwendet:

Eine Zug-Dehnungsmaschine, Typ 43.02 H 3570 der Fa. Instron (Offenbach/M, Bundesrepulik Deutschland) zur Bestimmung der Reißfestigkeit, Reißdehnung und des Zug-E-Moduls.

Ein Kalorimeter, Typ DSC7 der Fa. Perkin-Elmer (Überlingen, Bundesrepulik Deutschland) zur Bestimmung der thermischen Eigenschaften.

### Beispiele:

1) Mittels des angegebenen Kneters wurden 60 Gew.-% des flüssigkristallinen Copolyesters (A1), 40 Gew.-% des Polyetherimids sowie unterschiedliche Gew.-% an PAB nach intensiver Trocknung gemeinsam unter Stickstoff geknetet. Die Knetmasse wurde anschließend nach intensiver Trocknung zu Preßplatten verarbeitet. Aus diesen Platten wurden Schulterstäbe ausgefräßt. Die Tabelle 1 zeigt die daraus ermittelten mechanischen Eigenschaften der Mischungen.

**Tabelle 1**

| | | | |
|---|---|---|---|
| (A1):B:PAB | 60:40:0 | 60:40:2 | 60:40:4 |
| Reißfestigkeit (MPa) | 33 | 51 | 37 |
| Reißdehung (%) | 1,6 | 3,2 | 1,8 |
| Zug-E-Modul (MPa) | 2310 | 3000 | 2500 |

Der Tabelle 2 sind die ermittelten thermischen Eigenschaften der Mischungen zu entnehmen:

**Tabelle 2**

| | | | |
|---|---|---|---|
| (A1) : B: PAB | 60:40:0 | 60:40:2 | 60:40:4 |
| Glasübergangstemperatur (°C) | 209 | 203,8 | 203 |
| Schmelztemperatur (°C) | 333 | 327 | 329 |
| Schmelzenthalpie (J/g) | 0,9 | 1,5 | 1,1 |

2) Mittels des Kneters wie in Beispiel 1 wurden 60 Gew.-% des flüssigkristallinen Copolyesters (A1), 40 Gew.-% des Polyetherimid B) sowie unterschiedliche Gew.-% an PMDA nach intensiver Trocknung gemeinsam unter Stickstoff geknetet. Die Knetmasse wurde anschließend nach intensiver Trocknung zu Preßplatten verarbeitet. Aus diesen Platten wurden Schulterstäbe ausgefräßt. Die Tabelle 3 zeigt die daraus ermittelten mechanischen Eigenschaften der Mischungen.

**Tabelle 3**

| | | | |
|---|---|---|---|
| (A1):B:PMDA | 60:40:0 | 60:40:2 | 60:40:4 |
| Reißfestigkeit (MPa) | 33 | 43 | 33 |
| Reißdehung (%) | 1,6 | 1,8 | 1,6 |
| Zug-E-Modul (MPa) | 2310 | 3100 | 2600 |

Der Tabelle 4 sind die ermittelten thermischen Eigenschaften der Mischungen zu entnehmen:

**Tabelle 4**

| | | | |
|---|---|---|---|
| (A1) : B : PMDA | 60:40:0 | 60:40:2 | 60:40:4 |
| Glasübergangstemperatur (°C) | 209 | 209 | 210 |
| Schmelztemperatur (°C) | 333 | 320 | n.d. |
| Schmelzenthalpie (J/g) | 0,9 | 0,5 | n.d. |

| | | | |
|---|---|---|---|
| n.d.: nicht bestimmbar | | | |

## Patentansprüche

1. Mischung aus jeweils mindestens einem A) flüssigkristallinen Copolymeren, B) Polyetherimid und C) Verträglichkeitsvermittler, dadurch gekennzeichnet, daß der Anteil der Komponenten A) und B) jeweils 5 bis 95 Gew.-% bezogen auf die Summe beider Komponenten beträgt, der Verträglichkeitsvermittler C) in Mengen von 0,5 bis 10 Gew.-% bezogen auf die Polymermischung A) und B) eingesetzt wird, die Komponente A) ein aromatischer Polyester mit einem mittleren Molekulargewicht von 2000 bis 200000 oder ein Copolyesteramid ist und wobei die Komponente C) Struktureinheiten der Formel
(X-)ᵢ--(R⁷)ₗ-(Y)ₘ-(R⁸)ₙ)ⱼ--(-Z)ₚ (IX)
aufweist, worin X und Z gleich oder verschieden sind und unabhängig voneinander für eine Hydroxy- oder Aminogruppe stehen sowie COOH, -CO-O-CO- oder -COOR darstellen, i und p sind jeweils gleich oder verschieden und stellen ganze Zahlen dar, wobei die Summe aus beiden 2 bis 10, vorzugsweise 2 bis 6 beträgt, R⁷ und R⁸ sind jeweils gleich oder verschieden bedeuten Alkylreste mit 1 bis 8 Kohlenstoffatome oder Arylreste mit 6 bis 30 C-Atomen oder Mischungen aus beiden, l und n sind Null oder 1, wobei die Summe aus beiden mindestens 1 ist, Y steht für eine divalente Gruppe O, C = O, SO₂, SO, S und NR⁹, wobei R⁹ eine substituierte oder unsubstituierte Alkyl- oder Arylgruppe mit 1 bis 18 Kohlenstoffatomen bedeutet, m ist Null oder 1 und j eine ganze Zahl 1, 2 oder 3.

2. Mischung nach Anspruch 1 dadurch gekennzeichnet, daß die Komponente A) wiederkehrende Einheiten der Formel 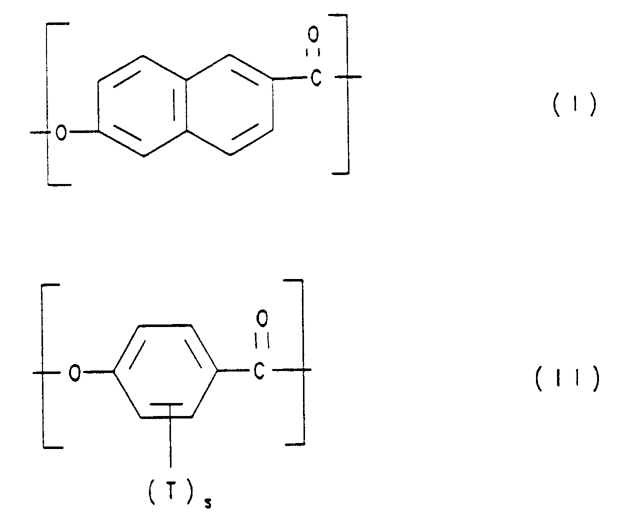 besitzt, worin T gleich oder verschieden und ausgewählt ist aus einem Alkylrest, einem Alkoxyrest, jeweils mit 1 bis 4 C-Atomen oder einem Halogen, s ist Null oder eine ganze Zahl 1, 2, 3 oder 4; das Verhältnis der Einheiten (I) und (II) beträgt 10 bis 90 zu 90 bis 10 Molprozent.

3. Mischung nach Anspruch 1 oder 2 dadurch gekennzeichnet, daß die Komponente A) mindestens zwei wiederkehrende Einheiten der Formeln 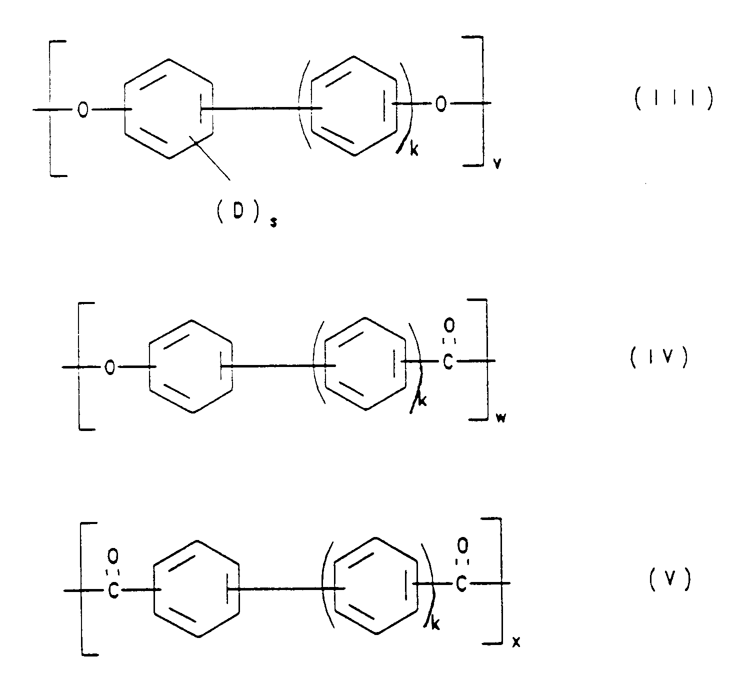 aufweist, in denen k Null oder 1 ist, v, w und x sind ganze Zahlen, die gleich oder größer als 1 sind, D ist gleich oder verschieden und ist ausgewählt aus einem Alkylrest mit 1 bis 4 C-Atomen, einem Arylrest, einem Aralkylrest, jeweils mit 6 bis 10 C-Atomen oder einem Halogen.

4. Mischung nach Anspruch 3, dadurch gekennzeichnet, daß die Summe der Indexzahlen v, w und x 30 bis 600 beträgt und der Anteil der Einheiten 0,6 bis 60 Mol-% (III), 0,4 bis 98,5 Mol-% (IV) und 1 bis 60 Mol-% (V) ist, bezogen auf 100 Mol-%.

5. Mischung nach Anspruch 3 oder 4, dadurch gekennzeichnet, daß die Komponente A) aus 40 bis 60 Mol-% der Einheiten (III) und 40 bis 60 Mol-% der Einheiten (V) besteht.

6. Mischung nach einem oder mehreren der Ansprüche 1 bis 5, dadurch gekennzeichnet, daß die Komponente A) neben den ausgewählten Einheiten aus (III) bis (V) auch solche der Einheiten (I) und/oder (II) enthält.

7. Mischung nach einem oder mehreren der Ansprüche 1 bis 6, dadurch gekennzeichnet, daß die Komponente A) neben Einheiten (I) bis (V) zusätzlich mindestens eine Struktureinheit 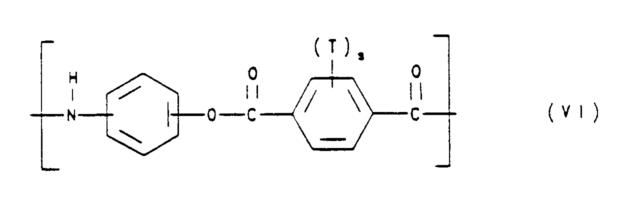 enthält, worin T und s die obengenannte Bedeutung haben.

8. Mischungen nach einem oder mehreren der Ansprüche 1 bis 7, dadurch gekennzeichnet, daß die Komponente A) die Struktureinheiten enthalt: (I) 1 bis 15 Mol-%, (II) 50 bis 79 Mol-%, (III) 10 bis 20 Mol-% und (V) 10 bis 20 Mol-%, wobei die Summe aller Einheiten stets 100 Mol-% ist.

9. Mischung nach einem oder mehreren der Ansprüche 1 bis 8, dadurch gekennzeichnet, daß die Komponente B) Polyetherimide mit wiederkehrenden Einheiten der Formeln darstellen:
a) 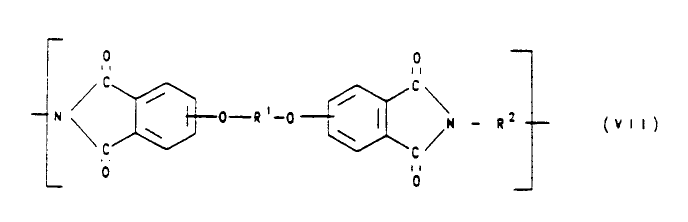 wobei R¹ ausgewählt ist aus einem substituierten oder unsubstituierten aromatischen Rest der Formel 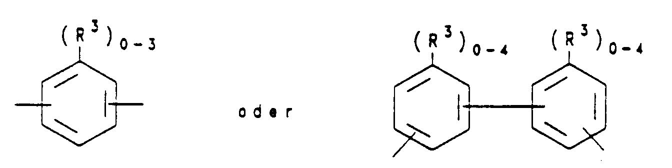 oder einem zweiwertigen Rest der Formel 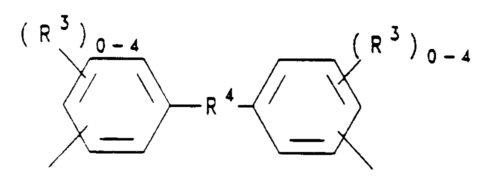 in denen R³ für C₁-C₆-Alkyl oder Halogen steht und R⁴ eine direkte Bindung oder ein divalenter Rest -O-, -S-, -CO-, -SO₂-, -SO, Alkylen und Alkyliden mit jeweils 1 bis 6 Kohlenstoffatomen oder Cycloalkylen und Cycloalkyliden mit jeweils 4 bis 8 Kohlenstoffatomen darstellt, R² ist ein aromatischer Kohlenwasserstoffrest mit 6 bis 20 Kohlenstoffatomen, oder ein halogen- oder alkylsubstituiertes Derivat davon, wobei die Alkylgruppe 1 bis 6 Kohlenstoffatome enthält, ein Alkylen- oder Cycloalkylenrest mit 2 bis 20 Kohlenstoffatomen oder ein zweiwertiger Rest der Formel 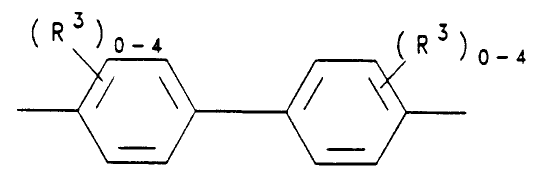 wobei R³ die obige Bedeutung hat, oder
b) 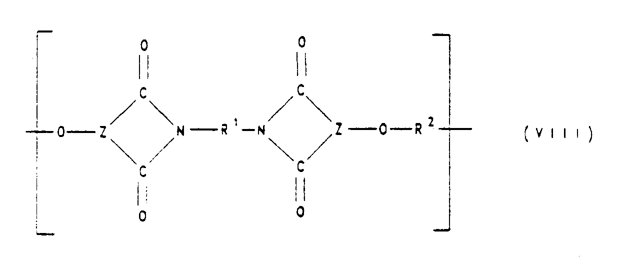 in der R¹ und R² wie oben definiert ist und wobei 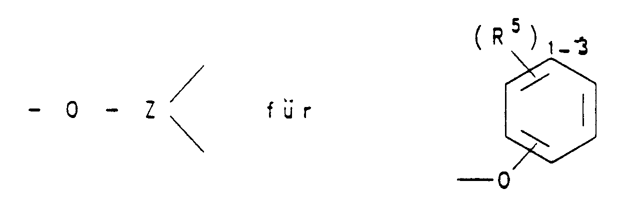 steht, R⁵ ist in dem Rest -O-Z unabhängig voneinander Wasserstoff, Alkyl oder Alkoxy mit 1 bis 6 C-Atomen im Alkyrest, oder steht für 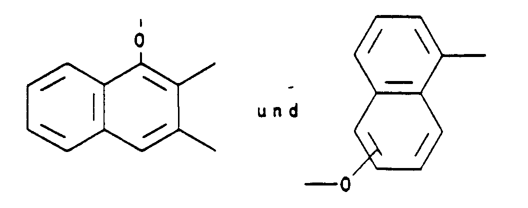 wobei der Sauerstoff mit einem der Ringe verknüpft ist und in ortho- oder para-Stellung zu einer der Bindungen der Imidcarbonylgruppe steht.

10. Mischung nach Anspruch 9, dadurch gekennzeichnet, daß das Polyetherimid die wiederkehrenden Einheiten 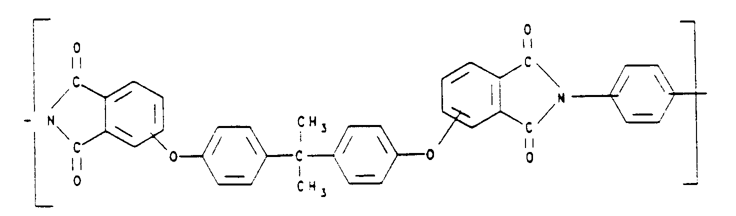 aufweist.

11. Mischung nach einem oder mehreren der Ansprüche 1 bis 10, dadurch gekennzeichnet, daß als Komponente C) para-Aminobenzoesäure (PAB) und Pyromellithsäuredianhydrid (PMDA) eingesetzt wird.

12. Mischung nach einem oder mehreren der Ansprüche 1 bis 11 dadurch gekennzeichnet, daß sie zusätzlich weitere Additive enthält.

13. Verwendung der Mischung gemäß einem oder mehreren der Ansprüche 1 bis 11 zur Herstellung von Formkörpern oder als Matrixmaterial für Verbundwerkstoffe.

## Claims

1. A mixture of at least one A) liquid crystalline copolymer, at least one B) polyether imide and at least one C) compatibilizer, characterized in that the proportion of components A) and B) is in each case 5 to 95% by weight, based on the sum of the two components, compatibilizer C) is used in amounts of 0.5 to 10% by weight, based on the polymer mixture A) and B), component A) is an aromatic polyester with a mean molecular weight of 2000 to 200,000 or a copolyester amide and where component C) contains structural units of the formula
(X-)ᵢ--(R⁷)ₗ-(Y)ₘ-(R⁸)ₙ)ⱼ--(-Z)ₚ (IX)
where X and Z are identical or different and are, independently of one another, a hydroxyl or amino group, or COOH, -CO-O-CO- or -COOR, i and p are in each case identical or different and are integers, the sum of the two indices being 2 to 10, preferably 2 to 6, R⁷ and R⁸ are in each case identical or different and are alkyl radicals with 1 to 8 carbon atoms or aryl radicals with 6 to 30 carbon atoms or mixtures of the two, l and n are zero or 1, the sum of the two indices being at least 1, Y is a divalent O, C=O, SO₂, SO, S or NR⁹ group, R⁹ being a substituted or unsubstituted alkyl or aryl group with 1 to 18 carbon atoms, m is zero or 1 and j is the integer 1, 2 or 3.

2. A mixture as claimed in claim 1, characterized in that component A) has recurring units of the formula 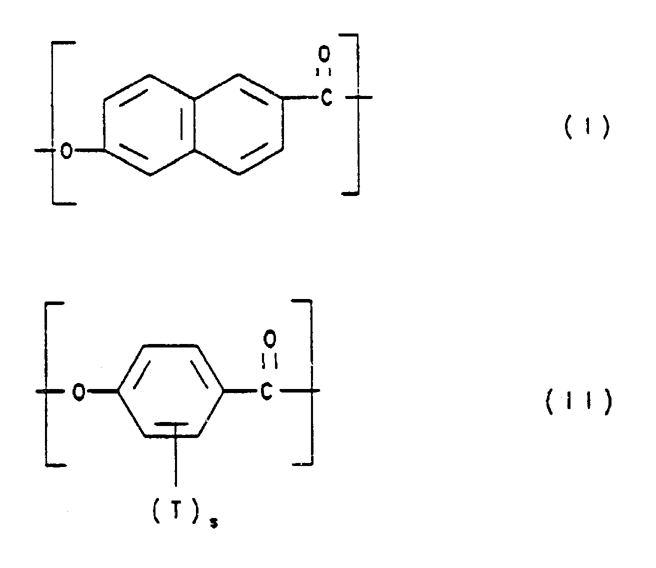 where T is identical or different and is selected from an alkyl radical, an alkoxy radical, in each case with 1 to 4 carbon atoms, or a halogen, s is zero or the integer 1, 2, 3 or 4, and the ratio of the units (I) and (II) is 10 to 90 to 90 to 10 mol percent.

3. A mixture as claimed in claim 1 or 2, characterized in that component A) contains at least two recurring units of the formulae 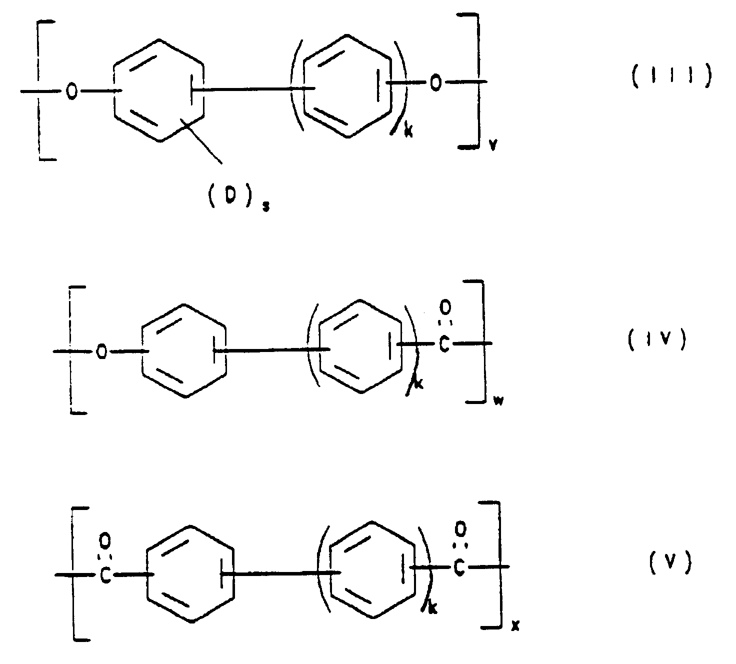 in which k is zero or 1, v, w, and x are integers equal to or greater than 1, and D is identical or different and is selected from an alkyl radical with 1 to 4 carbon atoms, an aryl radical, an aralkyl radical, in each case with 6 to 10 carbon atoms, or a halogen.

4. A mixture as claimed in claim 3, wherein the sum of the index numerals v, w and x is 30 to 600, and the proportion of the units is 0.6 to 60 mol% (III), 0.4 to 98.5 mol% (IV) and 1 to 60 mol% (V), based on 100 mol%.

5. A mixture as claimed in claim 3 or 4, wherein component A) is composed of 40 to 60 mol% of units (III) and 40 to 60 mol% of units (V).

6. A mixture as claimed in one or more of claims 1 to 5, wherein component A) contains, in addition to the selected units from (III) to (V), also units (I) and/or (II).

7. A mixture as claimed in one or more of claims 1 to 6, wherein component A) additionally contains, as well as units (I) to (V), at least one structural unit 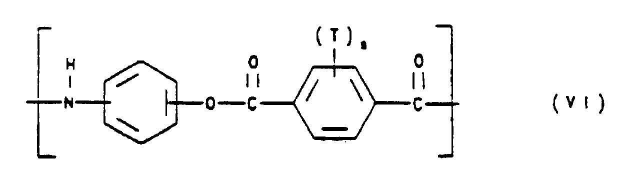 where T and s have the aforementioned meanings.

8. A mixture as claimed in one or more of claims 1 to 7, wherein component A) contains the structural units: (I) 1 to 15 mol%, (II) 50 to 79 mol%, (III) 10 to 20 mol%, and (V) 10 to 20 mol%, the sum of all units always totaling 100 mol%.

9. A mixture as claimed in one or more of claims 1 to 8, wherein component B) is a polyether imide with recurring units of the formulae:
a) 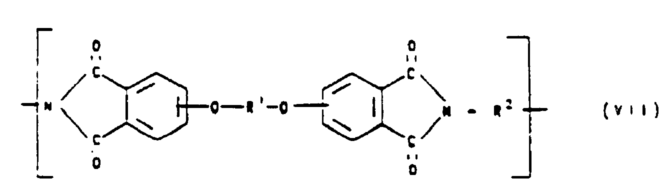 where R¹ is selected from a substituted or unsubstituted aromatic radical of the formula 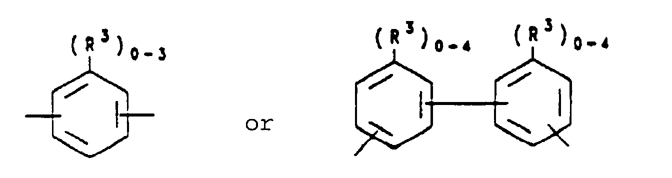 or a divalent radical of the formula 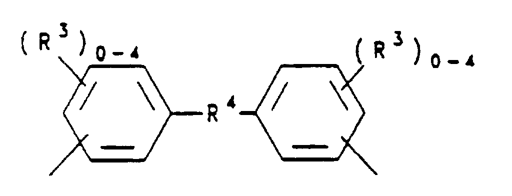 in which R³ is C₁-C₆-alkyl or halogen and R⁴ is a direct bond or a divalent -O-, -S-, -CO-, -SO₂- or -SO radical, alkylene or alkylidene with in each case 1 to 6 carbon atoms, or cycloalkylene or cycloalkylidene with in each case 4 to 8 carbon atoms, R² is an aromatic hydrocarbon radical with 6 to 20 carbon atoms, or a halogen-substituted or alkyl-substituted derivative thereof, the alkyl group containing 1 to 6 carbon atoms, an alkylene or cycloalkylene radical with 2 to 20 carbon atoms, or a divalent radical of the formula 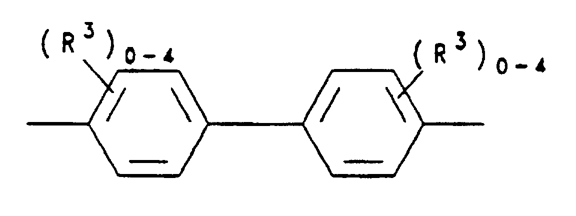 where R³ has the above meaning, or
b) 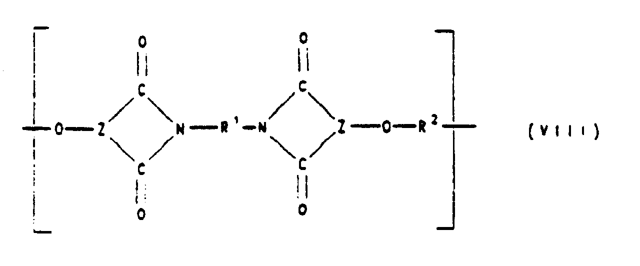 in which R¹ and R² are as defined above, and where 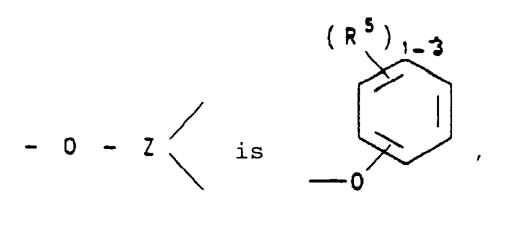 R⁵ in the -O-Z radical is, independently of one another, hydrogen, alkyl or alkoxy with 1 to 6 carbon atoms in the alkyl radical, or is 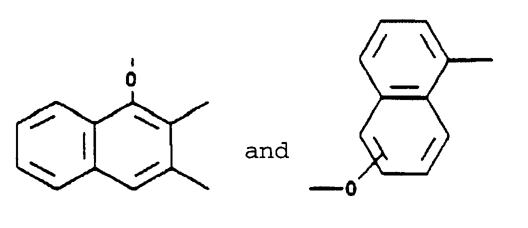 where the oxygen atom is coupled to one of the rings and is in the ortho- or para-position to one of the bonds of the imidocarbonyl group.

10. A mixture as claimed in claim 9, wherein the polyether imide contains the recurring units

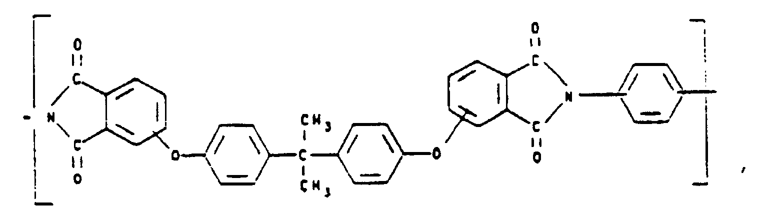

11. A mixture as claimed in one or more of claims 1 to 10, wherein para-aminobenzoic acid (PABA) or pyromellitic dianhydride (PMDA) is used as component C).

12. A mixture as claimed in one or more of claims 1 to 11 which additionally contains further additives.

13. A method of using a mixture as claimed in one or more of claims 1 to 11 to produce molded articles or as a matrix material for composites.

## Revendications

1. Mélange de chaque fois au moins un A) copolymère liquide cristallin, B) polyétherimide et C) agent de compatibilité, caractérisé en ce que la proportion des composants A) et B) est chaque fois de 5 à 95% en poids sur base de la somme des deux composants, l'agent de compatibilité C) est utilisé en quantités de 0,5 à 10% en poids sur base du mélange polymère A) et B), le composant A) est un polyester aromatique avec un poids moléculaire moyen de 2000 à 200 000 ou un copolyesteramide et dans lequel le composant C) présente des unités de structure de formule
(X-)ᵢ-(R⁷)ₗ-(Y)ₘ-(R⁸)ₙ)ⱼ-(-Z)ₚ (IX)
dans laquelle X et Z sont identiques ou différents et sont mis indépendamment l'un de l'autre, pour un groupement hydroxy ou amino et représentent COOH, -CO-O-CO- ou -COOR, i et p sont chaque fois identiques ou différents et représentent des nombres entiers, la somme des deux étant 2 à 10, de préférence 2 à 6, R⁷ et R⁸ sont chaque fois identiques ou différents et signifient des radicaux alkyle ayant 1 à 8 atomes de carbone ou des radicaux aryle ayant 6 à 30 atomes de carbone ou des mélanges des deux, l et n sont zéro ou 1, la somme des deux étant au moins 1, Y est mis pour un groupement divalent O, C=O, SO₂, SO, S, et NR⁹, R⁹ signifiant un groupement alkyle ou aryle substitué ou non substitué ayant 1 à 18 atomes de carbone, m est zéro ou 1 et j est un nombre entier 1, 2 ou 3.

2. Mélange suivant la revendication 1, caractérisé en ce que le composant A) possède des unités récurrentes de formule 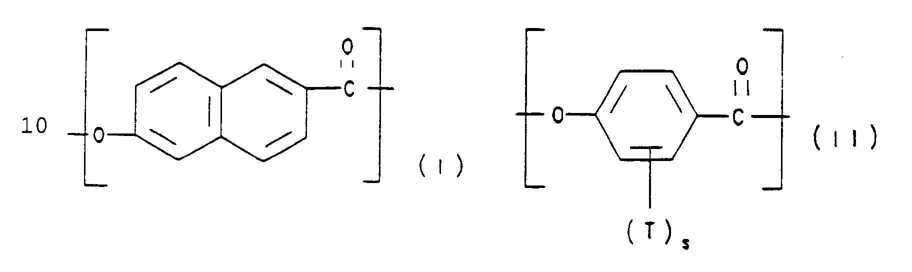 dans laquelle T est identique ou différent et sélectionné parmi un radical alkyle, un radical alkoxy ayant chaque fois 1 à 4 atomes de carbone ou un halogène, s est zéro ou un nombre entier 1, 2, 3 ou 4; le rapport des unités (I) et (II) est 10 à 90 jusqu'à 90 à 10% en mole.

3. Mélange suivant la revendication 1 ou 2, caractérisé en ce que le composant A) présente au moins deux unités récurrentes de formules 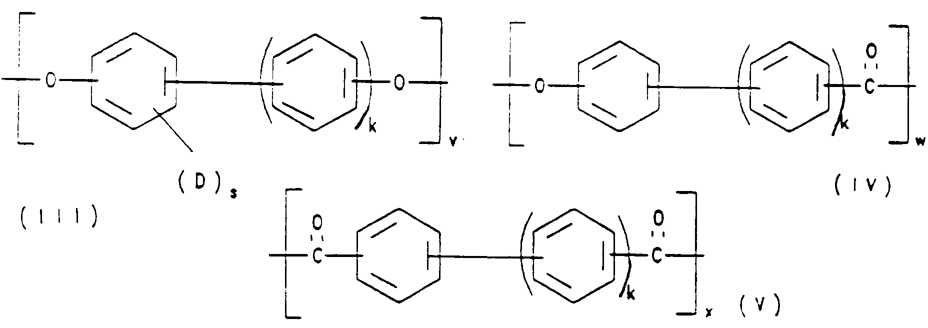 dans lesquelles k est zéro ou 1, v, w et x sont des nombres entiers, qui sont identiques ou plus grands que 1, D est identique ou différent et est sélectionné parmi un radical alkyle ayant 1 à 4 atomes de carbone, un radical aryle, un radical arylalkyle, ayant chaque fois 6 à 10 atomes de carbone ou un halogène.

4. Mélange suivant la revendication 3, caractérisé en ce que la somme des indices v, w et x est 30 à 600 et la proportion des unités est 0,6 à 60% en mole de (III), 0,4 à 98,5% en mole de (IV) et 1 à 60% en mole de (V), sur base de 100% en mole.

5. Mélange suivant la revendication 3 ou 4, caractérisé en ce que le composant A) est constitué de 40 à 60% en mole des unités (III) et de 40 à 60% en mole des unités (V).

6. Mélange suivant l'une ou plusieurs des revendications 1 à 5, caractérisé en ce que le composant A), outre les unités sélectionnées de (III) à (V), contient également des unités du type (I) et/ou (II).

7. Mélange suivant l'une ou plusieurs des revendications 1 à 6, caractérisé en ce que le composant A), outre des unités (I) à (V), contient en plus au moins une unité de structure 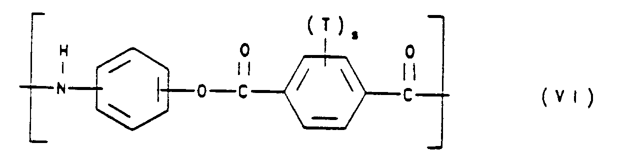 dans laquelle T et s ont la signification susmentionnée.

8. Mélanges suivant l'une ou plusieurs des revendications 1 à 7, caractérisés en ce que le composant A) contient les unités de structure: (I) 1 à 15% en mole, (II) 50 à 79% en mole, (III) 10 à 20% en mole et (V) 10 à 20% en mole, la somme de toutes les unités étant toujours de 100% en mole.

9. Mélange suivant l'une ou plusieurs des revendications 1 à 8, caractérisé en ce que le composant B) représente des polyétherimides avec des unités récurrentes de formules
a) 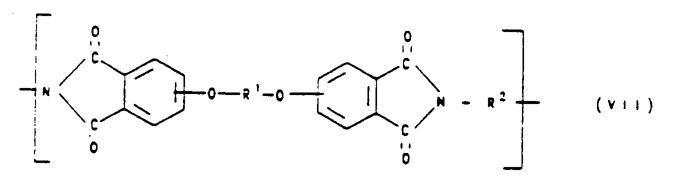 dans laquelle R¹ est sélectionné parmi un radical aromatique substitué ou non substitué de formule 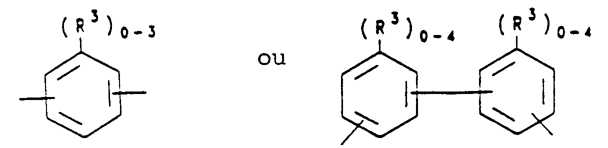 ou un radical divalent de formule 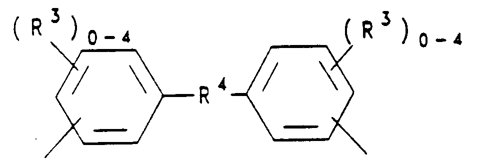 dans lesquelles R³ est mis pour alkyle en C₁-C₆ ou un halogène et R⁴ représente une liaison directe ou un radical divalent -O-, -S-, -CO-, -SO₂-, -SO, alkylène et alkylidène ayant chaque fois 1 à 6 atomes de carbone ou cycloalkylène et cycloalkylidène ayant chaque fois 4 à 8 atomes de carbone, R² est un radical hydrocarboné aromatique ayant 6 à 20 atomes de carbone, ou un dérivé halogène ou substitué par alkyle de celui-ci, le groupement alkyle contenant 1 à 6 atomes de carbone, un radical alkylène ou cycloalkylène ayant 2 à 20 atomes de carbone ou un radical divalent de formule 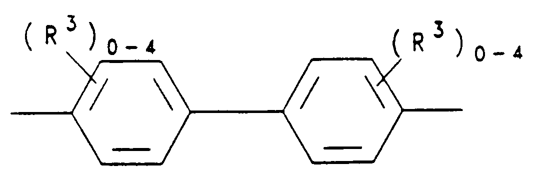 dans laquelle R³ a la signification donnée plus haut, ou
b) 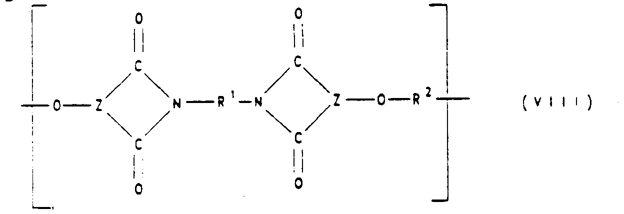 dans laquelle R¹ et R² sont comme définis plus haut et dans laquelle 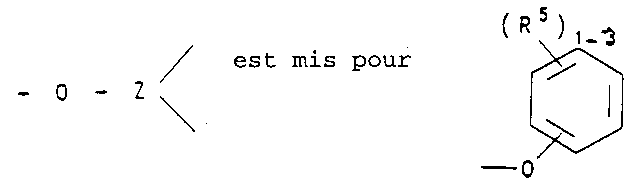 R⁵ est dans le radical -O-Z indépendamment l'un de l'autre, hydrogène, alkyle ou alkoxy avec 1 à 6 atomes de carbone dans le radical alkyle, ou est mis pour 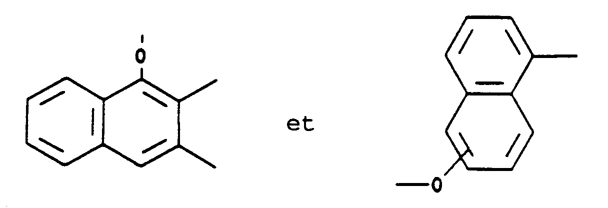 dans laquelle l'oxygène est relié à l'un des cycles et est en position ortho ou para par rapport à une des liaisons du groupement imidocarbonyle.

10. Mélange suivant la revendication 9, caractérisé en ce que le polyétherimide présente les unités récurrentes

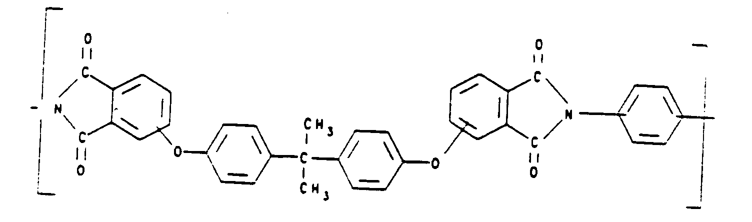

11. Mélange suivant l'une ou plusieurs des revendications 1 à 10, caractérisé en ce que de l'acide para-aminobenzoïque (PAB) et du dianhydride d'acide pyromellitique (PMDA) sont utilisés comme composant C).

12. Mélange suivant l'une ou plusieurs des revendications 1 à 11, caractérisé en ce qu'il contient en outre d'autres additifs.

13. Utilisation du mélange suivant l'une ou plusieurs des revendications 1 à 11, pour la préparation de corps moulés ou comme matériau de matrice pour des matériaux composites.
